# EUROPÄISCHE PATENTANMELDUNG

(11) **EP 2 008 516 A1**
(43) Veröffentlichungstag der Anmeldung: **31.12.2008**
(21) Anmeldenummer: 08011678.3
(22) Anmeldetag: 27.06.2008
(51) Int. Cl.: A01N 31/02, A01N 37/36

(54) **Verwendung eines alkoholischen Desinfektionsmittels zur Schnelldesinfektion**

(30) Priorität: 29.06.2007 DE 102007030417; 20.06.2008 DE 102008028993
(71) Anmelder: Bode Chemie GmbH & Co. KG, 22525 Hamburg (DE)
(72) Erfinder: Krug, Barbara, Dr., 20259 Hamburg (DE); Schulte, Elke, Dipl.-Ing., 22047 Hamburg (DE); Ostermeyer, Christiane, 22559 Hamburg (DE); Kampf, Günter, Dr., 20257 Hamburg (DE); Dabek, Sven, Dr., 22523 Hamburg (DE); Reichel, Mirja, 22525 Hamburg (DE)
(74) Vertreter: Kossak, Sabine

(57) **Zusammenfassung**

Gegenstand der vorliegenden Erfindung ist die Verwendung eines Desinfektionsmittels zur präoperativen Schnelldesinfektion talgdrüsenreicher Haut. Durch das erfindungsgemäß verwendete alkoholische Desinfektionsmittel ist eine deutliche Verbesserung der Keimreduktion möglich, so dass die Wahrscheinlichkeit für eine chirurgische Infektion weiter gesenkt werden kann.

## Beschreibung

Gegenstand der vorliegenden Erfindung ist die Verwendung eines Desinfektionsmittels zur präoperativen Schnelldesinfektion talgdrüsenreicher Haut.

Die Desinfektion der Haut des Patienten ist eine Standardmaßnahme in der Krankenhaushygiene. Sie wird vom Personal entweder vor Injektionen bzw. Punktionen oder vor Operationen am Patienten durchgeführt. Auf talgdrüsenreicher Haut erfolgt die Hautdesinfektion momentan mit einer Standardeinwirkzeit von 10 Minuten. Die Hautdesinfektion ist jedoch nicht zu verwechseln mit der Händedesinfektion des Personals, die beispielsweise nach einer Kontamination der Hände durchgeführt wird, dabei handelt es sich um sogenannte "hygienische Händedesinfektion" mit einer Dauer von 30 Sekunden oder vor Operationen um die sogenannte "chirurgische Händedesinfektion" mit einer Dauer zwischen 1,5 und 5 Minuten je nach Präparat.

Chirurgische Infektionen gehören zu den häufigsten infektiösen Komplikationen bei der Behandlung im Krankenhaus. Etwa 7,2% der chirurgischen Patienten in deutschen Krankenhäusern bekommen eine chirurgische Infektion, abhängig vom Operationstyp. Diese chirurgischen Infektionen haben eine große wirtschaftliche Auswirkung, da die Patienten mit entsprechenden Infektionen im Durchschnitt 6,5 Tage länger im Krankenhaus bleiben müssen und etwa 5 Mal so häufig im Krankenhaus behandelt werden müssen. Zudem müssen diese Patienten mit einer 60% höheren Wahrscheinlichkeit auf der Intensivstation behandelt werden. Um das Risiko bei entsprechenden Infektionen bei chirurgischen Eingriffen zu verringern, wird empfohlen, vor dem Eingriff die Haut zu desinfizieren. Für die Hautdesinfektion werden dabei üblicherweise alkoholische Desinfektionsmittel eingesetzt, die zusätzliche antiseptische Wirkstoffe wie z.B. quartemäre Ammoniumverbindungen, Octenidin, Chlorhexidinsalze, Phenoxyethanol, Jod oder Jodderivate enthalten.

Auf der Haut sind natürlicherweise verschiedene Keime zu finden. Diese Mikroorganismen werden auch als Hautflora bezeichnet. Dabei unterscheidet man zwischen der natürlich auf der Haut vorkommenden Flora, die als residente Hautflora bezeichnet wird und hautfremden Keimen, die auch als Anflugkeime bezeichnet und als transiente Hautflora zusammengefasst werden. Während bei der hygienischen Händedesinfektion eine Reduktion der pathogenen Keime in der transienten Hautflora im Vordergrund steht, ist es Ziel der Hautdesinfektion, die residente Hautflora stark zu reduzieren und die transiente Hautflora vollständig zu entfernen. Bei jeder medizinischen Behandlung, bei der die Hautbarriere durchdrungen wird, soll die Keimzahl grundsätzlich so gering wie möglich sein. Das Ziel der Hautdesinfektion ist es deshalb, eine möglichst starke Reduktion der residenten und vollständige Elimination der transienten Hautflora zu bewirken.

Die Wirksamkeit eines Desinfektionsmittels wird durch die Keimzahlreduktion auf der Hautoberfläche bestimmt. Wenn die Keimzahl auf der Hautoberfläche beispielsweise auf 1/100 bis auf 1/1000 reduziert wird, entspricht das einem logarithmischen Reduktionsfaktor der Keimzahl von 2 bis 3. Bei der Hautdesinfektion, d.h. der Reduzierung von residenter und transienter Hautflora, muss weiter beachtet werden, dass für die Hautdesinfektion auf talgdrüsenarmer Haut, wie den Händen, Armen und Beinen, häufig mit einer relativ kurzen Einwirkzeit von etwa 1 Minute gerechnet werden kann, während eine Keimreduktion auf talgdrüsenreicher Haut eine längere Einwirkzeit erfordert. Auf der talgdrüsenreichen Haut, z.B. im Stirnbereich oder der vorderen und hinteren Schweißrinne, ist die Keimreduktion aufgrund der residenten Hautflora, die in diesen Bereichen stärker vertreten ist, wesentlich schwieriger und benötigt längere Einwirkzeiten. Die Deutsche Gesellschaft für Hygiene und Mikrobiologie (DGHM) empfiehlt daher für talgdrüsenreiche Haut Einwirkzeiten von mindestens 10 Minuten, während die entsprechenden Mittel für eine Desinfektion von talgdrüsenarmer Haut vor operativen Eingriffen nur 1 Minute einwirken müssen. Alkoholische Desinfektionsmittel zeigen häufig eine schnelle Keimreduktion auf talgdrüsenarmer Haut, während die Keimreduktion auf talgdrüsenreicher Haut deutlich verlangsamt ist. So ist aus der DE 198 08 963 C2 ein Desinfektionsmittel bekannt, das auf talgdrüsenarmer Haut eine Keimreduktion in 15 Sekunden erreicht, während auf talgdrüsenreicher Haut eine Einwirkzeit von 10 Minuten notwendig ist. Auch das entsprechende Testverfahren der DGHM für die Wirksamkeitsnachweise sieht eine Einwirkzeit von 10 Minuten vor. Diese Einwirkzeit von 10 Minuten geht auf publizierte Ergebnisse aus dem Jahre 1991 zurück und die publizierten Ergebnisse wurden als Standardverfahren von der DGHM übernommen (Christiansen B, Eggers H-J, Exner M, Gundermann K-O, Heeg P, Hingst V, Höffler U, Krämer J, Martiny H, Rüden H et al: Richtlinie für die Prüfung und Bewertung von Hautdesinfektionsmittein. Zbl Hyg 1991, 192:99-103)

Insbesondere im Bereich der Notfall- und Unfallmedizin ist es häufig nicht möglich, eine Einwirkzeit von 10 Minuten abzuwarten. Es besteht daher die Gefahr, dass durch die noch nicht ausreichende Keimreduktion bei der präoperativen Desinfektion chirurgische Infektionen auftreten.

Aufgabe der vorliegenden Erfindung ist es, ein Desinfektionsmittel bereitzustellen, das eine effektive Keimreduktion bei der präoperativen Desinfektion gewährleistet, die deutlich schneller als die bisherige Einwirkzeit von 10 Minuten ist. Die Desinfektionsmittel müssen gleichzeitig eine gute Hautverträglichkeit und eine geringe Toxizität aufweisen.

Die Aufgabe wird erfindungsgemäß gelöst durch die Verwendung eines Desinfektionsmittels, das 50 bis 99 Gew.% eines oder mehrerer Monoalkohole, mit 1 bis 3 Kohlenstoffatomen, Wasser und ggf. Hilfsstoffe enthält zur operativen Schnelldesinfektion talgdrüsenreicher Haut, wobei die Keimreduktion der transienten und residenten Hautflora innerhalb eines Zeitintervalls von weniger als 4 Minuten, bevorzugt weniger als 3 min mindestens gleichwertig der Keimreduktion beim Referenzverfahren mit 2-Propanol 70% (V/V) bei einer Einwirkzeit von 10 Minuten ist.

Überraschend wurde festgestellt, dass durch die Verwendung dieses Desinfektionsmittels eine zuverlässige Keimreduktion, d.h. eine Reduktion von Bakterien, behüllten und unbehüllten Viren, Mykobakterien und Pilzen in weniger als 4 Minuten, teilweise sogar innerhalb von 2 Minuten möglich ist.

Das erfindungsgemäß verwendete Desinfektionsmittel enthält vorzugsweise

| | | | |
|---|---|---|---|
| a. | 50 - 99 Gew.-% | einen oder mehrere alkoholische Wirkstoffe mit 1 bis 3 Kohlenstoff Atomen, | |
| b. | 0 - 10 Gew.-% | Hilfsstoffe ausgewählt aus der Gruppe | |
| | | 0 - 1 Gew.-% | eines oder mehrerer Farbstoffe, |
| | | 0 - 5 Gew.-% | einer oder mehrerer hautverträglicher, organischer Säuren |
| | | 0 - 5 Gew.-% | weiterer Zusatzstoffe und |
| | | 0 - 5 Gew.% | weiterer antimikrobieller Wirkstoffe und |
| c. | | Wasser, | |

wobei sich die Komponenten a. bis c. zu 100 Gew.-% ergänzen.

Der Gesamtalkoholgehalt des alkoholischen Wirkstoffs beträgt in dem erfindungsgemäß eingesetzten Desinfektionsmittel bevorzugt 50 bis 99 Gew.%, besonders bevorzugt 50 bis 90 Gew.-%, weiterhin bevorzugte Mengen sind 52 bis 87 Gew.-%. Dieses gilt sowohl wenn Ethanol, 1-Propanol, 2-Propanol als alleiniger alkoholischer Wirkstoff, als auch wenn diese in Mischungen mit den anderen alkoholischen Wirkstoffen eingesetzt werden. Als Ethanol wird dabei Ethanol (99%), der mit 1% 2-Butanon vergällt ist, eingesetzt.

Besonders bevorzugt wird erfindungsgemäß ein Desinfektionsmittels bestehend aus 86 Gew.-% 1-Propanol, entsprechend 89,5% (V/V) 1-Propanol, weiteren Hilfsstoffen und Wasser zur präoperativen Schnelldesinfektion der Haut, d.h. zur Hautschnelldesinfektion verwendet. Überraschenderweise hat sich gezeigt, dass 1-Propanol bei der Hautschnelldesinfektion in allen Konzentrationsbereichen anders als in anderen Anwendungsbereichen, wie z.B. der Händedesinfektion oder Flächendesinfektion, die gute Wirksamkeit der weiteren alkoholischen Wirkstoffe Ethanol und 2-Propanol und der Wirkstoffmischungen bei der Schnelldesinfektion talgdrüsenreicher Haut noch übertrifft. Die bereits gute Wirksamkeit von Ethanol kann durch den Einsatz von 1-Propanol als alleinigen alkoholischen Wirkstoff noch verbessert werden und führt zu einer besseren Desinfektion auf talgdrüsenreicher Haut.

Das erfindungsgemäß verwendete Desinfektionsmittel enthält in einer Ausführungsform neben dem alkoholischen Wirkstoff, Wasser und 0 bis 10 Gew.-% weitere Hilfsstoffe, bevorzugt in einer Menge von 0 bis 8 Gew.-%, besonders bevorzugt 0 bis 7 Gew.-%. Die Hilfsstoffe sind ausgewählt aus der Gruppe der Farbstoffe, der hautverträglichen, organischen Säuren, der Zusatzstoffe und der antimikrobiellen Wirkstoffe, wie sie nachfolgend beschrieben werden.

Das erfindungsgemäß verwendete Desinfektionsmittel enthält als Hilfsstoff ggf. eine oder mehrere hautverträgliche, organische Säuren. Geeignete hautverträgliche Säuren sind beispielsweise Mono,- Di- oder Polycarbonsäuren, die ggf. mit einer oder mehreren Hydroxygruppen substituiert sind. Bevorzugt ist die organische Säure Zitronensäure, Ascorbinsäure, Milchsäure oder. Pidolsäure (2-Pyrrolidon-5-carbonsäure), besonders bevorzugt Milchsäure.

In einer Ausführungsform enthält das erfindungsgemäß eingesetzte Desinfektionsmittel als Hilfsstoffe weitere mikrobiozid- und/oder viruswirksame Stoffe. Beispielsweise können als weitere antimikrobielle Zusatzstoffe zugesetzt werden:

| | | |
|---|---|---|
| **Gruppe** | **Chemische Klasse** | **Beispiele** |
| 1 | Quaternäre Ammoniumverbindungen, z.B. | Benzalkoniumchlorid, Mecetronium etilsulfat |
| 2 | Guanidine, z.B. | Polyhexanid, Chlorhexidinsalze |
| 3 | Pyridin-Derivate, z.B. | Octenidindihydrochlorid. Zink-Pyrithion |
| 4 | Phenol-Derivate, z.B. | o-Phenylphenol, p-Chlor-m-Kresol, 2-Phenoxyethanol, Phenoxypropanol |
| 5 | Peroxide, z.B. | Wasserstoffperoxid, Benzoylperoxid |

Das erfindungsgemäß eingesetzte Desinfektionsmittel enthält als Hilfsstoffe ggf. Zusatzstoffe in einer Menge von 0 bis 5 Gew.-%. Dabei werden als Zusatzstoffe beispielsweise wasserlösliche und/oder alkohollösliche Polymere zur Verbesserung der Stabilität der Lösung und zur besseren Entfernbarkeit der Farbstoffe von der Haut, Verdickungsmittel, wie Acrylate und deren Derivate, Cellulose und Cellulosederivate oder andere handelsübliche Verdicker, hautverträgliche Tenside oder Emulgatoren zugesetzt. Bevorzugt wird bei gefärbten Desinfektionsmitteln als Zusatzstoff z.B. Polyvinylpyrrolidon (PVP) eingesetzt, das unter anderem unter dem Handelsnamen Kollidon^{®} 90F erhältlich ist. Bei einem Zusatz von Polyvinylpyrrolidon wird dieses in einer Menge von 0,05 bis 1 Gew.-% eingesetzt. Der eingesetzte Ethanol kann zudem Vergällungsmittel wie 2-Butanon enthalten.

Das erfindungsgemäß eingesetzte Desinfektionsmittel kann gefärbt oder ungefärbt sein. Wenn als erfindungsgemäßes Desinfektionsmittel ein gefärbtes Desinfektionsmittel eingesetzt wird, enthält dieses einen oder mehrere Farbstoffe, wobei synthetische organische Farbstoffe gegenüber natürlichen und naturidentisch synthetischen Farbstoffen bevorzugt sind. Geeignete Farbstoffe sind beispielsweise in der Arzneimittelfarbstoffverordhung genannt. Besonders bevorzugt werden als Farbstoffe einzeln oder in Mischungen Chinolingelb (E 104), Patentblau V (E 131), Indigotin (E 132) und Brilliantgrün BS (E 142) eingesetzt. Grundsätzlich können alle Farbstoffe, die in Arzneimitteln, Bioziden oder Kosmetika zugelassen sind, eingesetzt werden.

Unter präoperativer Desinfektion wird erfindungsgemäß der gesamte Bereich der prä- und intraoperativen und postoperativen infektionsprophylaxe verstanden. Zur präoperativen Desinfektion gehören die Desinfektion vor Injektionen, Punktionen und operativen Eingriffen und grundsätzlich alle medizinischen Behandlungen, bei denen die Hautbarriere durchdrungen wird. Die postoperative Desinfektion umfasst die Behandlung von Hautnähten und Randgebieten.

Ein Vorteil des erfindungsgemäß verwendeten Desinfektionsmittels ist, dass es im Gegensatz zu bisherigen Desinfektionsmitteln auch auf talgdrosenreicher Haut eine effektive Keimreduktion in einer stark verkürzten Einwirkzeit erlaubt. Die Einwirkzeit kann dabei auf weniger als 40%, teilweise auf weniger als 20% der bisherigen Einwirkzeit reduziert werden, so dass vorteilhafterweise eine zuverlässige Desinfektion auch im Bereich der Notfall- und Unfallmedizin möglich ist. Durch die stark verkürzte Einwirkzeit ermöglicht die erfindungsgemäße Verwendung eine weitere Reduktion der chirurgischen Infektionen. Besonders gute Ergebnisse wurden bei der präoperativen Hautdesinfektion mit 1-Propanol, insbesondere in einer Konzentration von 86 Gew.% erzielt, wobei sogar eine noch bessere Wirksamkeit im Vergleich zu den Alkoholen 2-Propanol und Ethanol auf talgdrüsenreicher Haut erzielt wurde.

Überraschenderweise hat sich gezeigt, dass erfindungsgemäß in den schwierig zu desinfizierenden Hautbereichen an der Halswirbelsäule, auf dem Bauch, im Lumbalbereich und auf der Stirn trotz der hohen Talgdrüsendichte auch bei kurzer Einwirkungszeit mit allen drei Alkoholen (1-Propanol, 2-Propanol und Ethanol) eine signifikante Reduktion der Bakterien erzielt werden kann. Deutlich bessere Wirksamkeiten als bei den bisherigen Standardverfahren wurden unabhängig von der Beschaffenheit des Hautareals und unabhängig von der Konzentration des Alkohols bei der Verwendung von Ethanol, 2-Propanol oder 1-Propanol, insbesondere 1-Propanol als einzigem alkoholischen Wirkstoff erzielt.
Gegenstand der Erfindung ist weiterhin ein Verfahren zur Desinfektion talgdrüsenreicher Haut. Bei dem erfindungsgemäßen Verfahren wird ein Desinfektionsmittel, das einen oder mehrere alkoholische Wirkstoffe, ggf. weitere Hilfsstoffe, ausgewählt aus der Gruppe bestehend aus einer oder mehreren hautverträglichen, organischen Säuren, Zusatzstoffen, Farbstoffen und Wasser, enthält, zur präoperativen Schnelldesinfektion auf die talgdrüsenreiche Haut aufgetragen, das Desinfektionsmittel wird für eine Zeit von weniger als 4 Minuten auf die Haut einwirken gelassen und es wird eine Keimreduktion auf der Haut erreicht, die mindestens der Keimreduktion im Referenzverfahren laut DGHM mit 70 Vol.-% 2-Propanol bei 10 Minuten Einwirkzeit entspricht. Das im Verfahren verwendete Desinfektionsmittel entspricht dem erfindungsgemäß verwendeten Desinfektionsmittel, wie es oben beschrieben ist.

In einer Ausführungsform enthält das Desinfektionsmittel als alleinigen alkoholischen Wirkstoff ausschließlich Ethanol oder 1-Propanol, bevorzugt 86 Gew.-% Ethanol oder 86 Gew.-% 1-Propanol.

Das verwendete Desinfektionsmittel enthält in einer bevorzugten Variante
80 bis 95 Gew.-% Ethanol, bevorzugt 86 Gew.-% Ethanol,
0 bis 5 Gew.-%, bevorzugt 0,1 bis 5 Gew.-% eine oder mehrere hautverträgliche, organische Säure(n),
0 bis 6 Gew.-% weitere Hilfsstoffe und
Wasser,
wobei sich die Komponenten zu 100 Gew.-% ergänzen.

Das verwendete Desinfektionsmittel enthält in einer weiteren bevorzugten Variante
80 bis 95 Gew.-% 1-Propanol, besonders bevorzugt 86 Gew.-%,
0 bis 10 Gew.-% Hilfsstoffe und
Wasser,
wobei sich die Komponenten zu 100 Gew.-% ergänzen.

Die Erfindung wird anhand von Beispielen weiter erläutert.

### BEISPIELE

Die folgenden Tabellen 1 und 2 zeigen einige Beispiele für erfindungsgemäß eingesetzte Desinfektionsmittel:

**Tabelle 1: Zusammensetzung der erfindungsgemäß verwendeten Desinfektionsmittel (Angaben in Gewichtsprozent)**

| | A | B | C | D | E | F | G |
|---|---|---|---|---|---|---|---|
| Ethanol (99%), vergällt mit 1% 2-Butanon | - | 86 | - | - | - | 86 | 86 |
| 1-Propanol | - | - | - | - | 8 | - | - |
| 2-Propanol | 63 | - | 63 | 63 | 65 | - | - |
| E 104 | 0,088 | 0,13 | - | - | 0,033 | - | 0,0096 |
| E 131 | - | - | - | - | - | - | 0,00124 |
| E 142 | - | - | 0,0044 | - | - | - | - |
| PVP | - | 0,5 | - | - | - | - | 0,5 |
| Milchsaure (90%) | - | 1 | - | - | - | 1 | 1 |
| Benzalkoniumchlorid | 0,025 | - | 0,025 | 0,025 | 0,025 | - | - |
| Wasser | ad.100 | ad.100 | ad.100 | ad.100 | ad.100 | ad.100 | ad.100 |

**Tabelle 2: Zusammensetzung der erfindungsgemäß verwendeten Desinfektionsmittel auf Basis von 1-Propanol (Angaben in Gewichtsprozent)**

| | H | I | J | K | L | M | N |
|---|---|---|---|---|---|---|---|
| 1-Propanol | 86 | 88 | 86 | 86 | 86 | 86 | 86 |
| E 104 | - | - | 0,13 | - | - | - | 0,0096 |
| E 131 | - | - | - | - | - | - | 0,00124 |
| PVP | - | - | 0,5 | - | - | - | 0,5 |
| Milchsäure (90%) | - | - | 1 | - | - | - | 1 |
| Chlorhexidindigluconat | - | - | - | 0,5 | 1,0 | 2,0 | - |
| Wasser | ad.100 | ad.100 | ad.100 | ad.100 | ad.100 | ad.100 | ad.100 |

Die Messungen und Probenahmen erfolgten gemäß den Testmethoden der DGHM bzw. in Anlehnung an die Testmethode der DGHM auf unterschiedlichen Hautarealen. Die Wirksamkeit der erfindungsgemäß verwendeten Desinfektionsmittel wurde durch Messung der Keimreduktion auf der Stirn bei 20 Probanden getestet. Das 1-Propanol-Desinfektionsmittel (89.5% (V/V)) wurde sowohl auf der Stirn als auch auf den anderen Hautarealen (Bauch, Halswirbelsäule und Lumbalbereich) an 20 Probanden getestet. Anschließend wurde es an 20 weiteren Probanden im direkten Überkreuz-Versuch gegen den DGHM-Referenzalkohol getestet. Als Referenz wurde eine wässrig alkoholische Lösung von 70 Vol.-%igen 2-Propanol aufgetragen und gemäß der von der DGHM vorgeschriebenen Methode 10 Minuten einwirken lassen.

Es wurden ein ungefärbtes Desinfektionsmittel mit 85,9 Gew.-% Ethanol (99%), Milchsäure und Wasser und ein gefärbtes Desinfektionsmittel mit 85,9 Gew.-% Ethanol (99%), Milchsäure, PVP, Farbstoffen und Wasser getestet. Es wurde dann die mittlere log₁₀-Reduktion der Keime berechnet. Die nachfolgenden Tabellen zeigen die Ergebnisse dieser Versuche.

Im Labor A wurden die folgenden Neutralisierungsmittel verwendet: 3% Tween 80, 0,3% Lecithin und 0,1% Cystein. In den Laboren B und C wurden die folgenden Neutralisierungsmittel verwendet: 3% Tween 80, 3% Saponin, 0,1% Histidin und 0,1% Cystein. Es wurden jeweils auf der Stirn verschiedene Bereiche markiert, in denen das Desinfektionsmittel neben dem Referenzalkohol aufgetragen wurde. Auf den Stimpartien wurde jeweils vor der Auftragung sowie jeweils nach 2, 2,5, 10 min und 30 min eine Probe genommen. Ein Desinfektionsmittel gilt als wirksam zur Hautdesinfektion, wenn der logarithmische Reduktionsfaktor (RF) nicht signifikant schlechter ist als der des Referenzalkohols nach 10 min.

**Tabelle 3: Mittlere Reduktion und Standardabweichung der residenten Hautflora auf der Stirn der Probanden; Einwirkzeit jeweils 10 min.**

| **Labor und Zahl der Probanden** | **Probenahmezeit nach Auftragung** | **Mittlere Bakterlendichte vor Desinfektion** | **RF (Mittelwert + Standardabweichung)** | | **p-Wert** |
|---|---|---|---|---|---|
| | | | **Referenzbehandlung (10 min)** | **Ungefärbtes ethanolisches Desinfektionsmittel (10 min)** | |
| A (n = 20) | 10 min | 3.88 ± 0.79 | 2.15 ± 0.78 | 2.72 ± 0.99 | 0.036 |
| | 30 min | | 1.94 ± 1.02 | 2.39 ± 0.97 | 0.012 |
| B (n = 20) | 10 min | 3.81 ± 0.45 | 2.44 ± 0.81 | 2.89 ± 0.70 | 0.10 |
| | 30 min | | 2.97 ± 0.96 | 3.45 ± 0.61 | 0.044 |
| Alle (n = 40) | 10 min | n.a. | 2.29 ± 0.80 | 2.81 ± 0.85 | 0.005 |
| | 30 min | | 2.46 ± 1.11 | 2.92 ± 0.96 | 0.004 |

**Tabelle 4: Mittlere Reduktion und Standardabweichung der residenten Hautflora auf der Stirn der Probanden; Einwirkzeit : Referenzalkohol 10 min, ungefärbtes ethanolisches Desinfektionsmittel 2,5 min.**

| **Labor und Zahl der Probanden** | **Probenahmezeit nach Auftragung** | **MittlereBakteriendichte vor Desinfektion** | **RF (Mittelwert + Standardabweichung)** | | **p·Wert** |
|---|---|---|---|---|---|
| | | | **Referenzbehandlung (10 min)** | **Ungefärbtes ethanollsches Desinfektionsmittel (2,5 min)** | |
| A(n=20) | 10 min / 2.5 min 30 min | 3.97 ± 0.47 | 2.08 ± 0.86 | 3.33 ± 0.38 | < 0.001 |
| | | | 2.36 ± 0.63 | 3.05 ± 0.49 | < 0.001 |
| B (n = 20) | 10 min / 2.5 min | 3.57 ± 0.48 | 2.79 ± 0.92 | 3.17 ± 0.67 | 0.028 |
| | 30 min | | 3.02 ± 0.69 | 2.92 ± 0.69 | 0.58 |
| C (n = 23) | 10 min / 2.5 min | 4.21 ± 0.71 | 1.77 ± 1.18 | 1.86 ± 1.40 | 0.51 |
| | 30 min | | 2.40 ± 1.29 | 2.39 ± 1.49 | 0.84 |
| Alle (n = 63) | 10 min | n.a. | 2.19 ± 1.08 | 2.74 ± 1.16 | < 0.001 |
| | 30 min | | 2.59 ± 0.97 | 2.77 ± 1.04 | 0.053 |

**Tabelle 5: Mittlere Reduktion und Standardabweichung der residenten Hautflora auf der Stirn der Probanden; Einwirkzeit: Referenzalkohol 10 min, ungefärbtes ethanolisches Desinfektionsmittel 2 min.**

| **Labor und Zahl der Probanden** | **Probenahmezeit nach Auftragung** | **Mittlere Bakteriendlchte vor Desinfektion** | **RF (Mittelwert + Standardabweichung)** | | **p-Wert** |
|---|---|---|---|---|---|
| | | | **Referenzbehandlung (10 min)** | **Ungefärbtes ethanolisches Desinfektionsmittel (2 min)** | |
| A (n = 20) | 10 min / 2 min 30 min | 3.97 ± 0.47 | 2.08 ± 0.86 | 3.05 ± 0.40 | 0.001 |
| | | | 2.36 ± 0.63 | 3.05 ± 0.49 | < 0.001 |
| B (n = 20) | 10 min / 2 min | 3.37 ± 0.62 | 2.03 ± 1.30 | 2.08 ± 0.88 | 0.55 |
| | 30 min | | 2.53 ± 1.07 | 2.13 ± 1.00 | < 0.1 |
| Alle (n = 40) | 10 min | n.a. | 2.05 ± 1.08 | 2.57 ± 0.84 | 0.002 |
| | 30 min | | 2.44 ± 0.87 | 2.59 ± 0.91 | 0.17 |

**Tabelle 6: Mittlere Reduktion und Standardabweichung der residenten Hautflora auf der Stirn der Probanden: Einwirkzeit: Referenzalkohol 10 min, gefärbtes ethanolisches Desinfektionsmittel 2,5 min.**

| **Labor und Zahl der Probanden** | **Probenahmezeit nach Auftragung** | **Mittlere Bakteriendichte vor Desinfektion** | **RF (Mlttelwert + Standardabweichung)** | | **p-Wert** |
|---|---|---|---|---|---|
| | | | **Referenzbehandlung (10 min)** | **Gefärbtes ethanolisches Desinfektionsmittel (2,5 min)** | |
| A (n = 20) | 10 min / 2.5 min | 3.79 ± 0.54 | 2.50 ± 0.70 | 3.25 ± 0.50 | < 0.001 |
| | 30 min | | 2.59 ± 0.69 | 2.96 ± 0.57 | 0.006 |
| B (n = 20) | 10 min / 2.5 min | 3.36 ± 0.81 | 1.94 ± 0.59 | 2.45 ± 0.81 | 0.007 |
| | 30 min | | 1.86 ± 0.74 | 2.43 ± 1.08 | 0.010 |
| C (n = 20) | 10 min / 2.5 min | 4.72 ± 0.60 | 1.26 ± 0.78 | 1.21 ± 0.64 | 0.60 |
| | 30 min | | 1.93 ± 1.18 | 2.09 ± 1.44 | 0.83 |
| Alle (n = 60) | 10 min /2.5 min | n.a. | 1.90 ± 0.85 | 2.30 ± 1.07 | < 0.001 |
| | 30 min | | 2.13 ± 0,94 | 2.49 ± 1.13 | 0.002 |

Aus den Tabellen 4 und 5 ist ersichtlich, dass das ungefärbte ethanolische Desinfektionsmittel auch bei einer Einwirkzeit von 2 oder 2,5 min zu einer signifikanten Keimreduktion führt. Auch für das gefärbte ethanolische Desinfektionsmittel kann eine ausreichend hohe Keimreduktion erreicht werden (Tab. 6). In beiden Fällen ist die Keimreduktion nach 2,5 min genauso gut wie nach 10 min, so dass eine Einwirkzeit nicht über 2,5 Minuten hinaus notwendig ist. Die erfindungsgemäße Verwendung des Desinfektionsmittels führt somit in einer Zeit von 2 bzw. 2,5 min zu einer vergleichbaren Keimreduktion wie das von der DGHM vorgeschriebenen Verfahren, für das ansonsten einen Einwirkzeit von 10 min notwendig war.

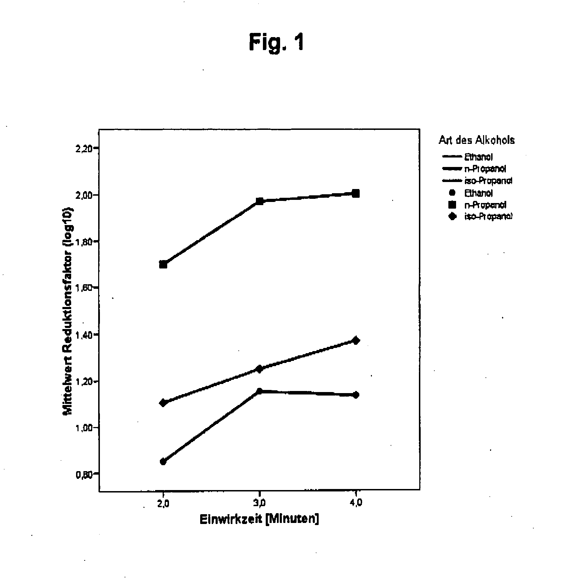

Figur 1 zeigt zudem einen Vergleich der Wirksamkeit der drei alkoholischen Wirkstoffe Ethanol, 1-Propanol und 2-Propanol bei der Desinfektion talgdrüsenreicher Haut auf der Stirn. Der Abbildung ist zu entnehmen, dass alle drei alkoholischen Wirkstoffe bei den kurzen Einwirkzeiten von 2, 3 und 4 Minuten eine signifikante Keimreduktion zeigen. Weiterhin ist zu erkennen, dass die Verwendung von 1-Propanol gegenüber den bereits guten Werten der alkoholischen Wirkstoffe Ethanol und 2-Propanol noch zu einer signifikanten Erhöhung des Reduktionsfaktors führt. Im Vergleich zu den anderen Konzentrationen (60 und 70 % (V/V)) konnte gezeigt werden, dass die Verwendung einer 89,5%igen Konzentration (V/V) zu einer weiteren deutlichen Verbesserung der Wirksamkeit beiträgt.

Im direkten Überkreuz-Vergleich zu dem Referenzverfahren der DGHM zeigte die 89,5%ige (V/V) 1-Propanollösung auf der Stirn überraschenderweise bei einer sehr kurzen Einwirkzeit (2 Minuten) eine Wirksamkeit, die nicht schlechter war als die des Referenzalkohols bei der 10-minütigen Einwirkzeit.

Wie gezeigt werden konnte, sind überraschenderweise und entgegen den bisherigen Standardprüfmethoden kurze Einwirkzeiten (≤ 4 Minuten) für die Hautantiseptik ausreichend. Zwei Faktoren beeinflussen die Wirksamkeit innerhalb dieser Einwirkzeiten stark. Bei diesen kurzen Einwirkzeiten ist der entscheidende Faktor für die Wirksamkeit eines Hautantiseptikums die Art des Alkohols. Es besteht die Möglichkeit, die gute Wirksamkeit der alkoholischen Wirkstoffe durch die Verwendung von 1-Propanol als einzigem, alkoholischen Wirkstoff deutlich zu erhöhen.

Weiterhin übt die verwendete Konzentration der Alkohollösung einen entscheidenden Einfluss auf die Wirksamkeit aus. Anders als bisher üblicherweise im Stand der Technik angenommen, zeigen die alkoholischen Wirkstoffe bei unterschiedlichen Konzentrationen deutlich unterschiedliche Wirksamkeiten. So konnte beispielsweise für eine 86%ige 1-Propanollösung eine weitere Wirksamkeitssteigerung beobachtet werden.

Überraschenderweise hat sich zudem gezeigt, dass sich der für ein bestimmtes Hautareal wirksamste alkoholische Wirkstoff für die Hautschnelldesinfektion anhand des folgenden Verfahrens bestimmen lässt, umfassend die Schritte:
a. Bestimmung des wirksamsten Wirkstoffs durch Messung der Bakterienreduktion bei mindestens einer Konzentration, wobei für jeden Wirkstoff die gleiche Konzentration angesetzt wird,
b. Bestimmung der geeigneten Konzentration des wirksamsten Alkohols gemäß Schritt a. durch Messung der Reduktionsfaktoren bei verschiedenen Konzentrationen dieses Alkohols und
c. Bestimmung einer geeigneten, im Vergleich zu dem Standardverfahren gemäß der DGHM verkürzten, Einwirkzeit der geeigneten Konzentration gemäß b. des wirksamsten Alkohols gemäß a. durch Messung der Reduktionsfaktoren.

Anders als gemäß dem Stand der Technik zu erwarten war, lässt sich für die Hautschnelldesinfektion talgdrüsenreicher Haut mit diesem Verfahren ein alkoholischer Wirkstoff finden, der seine Wirksamkeit nicht erst bei der Standardeinwirkzeit von 10 Minuten entfaltet, sondern bereits bei einer deutlich kürzeren Einwirkzeit eine vergleichbar gute bzw. bessere Bakterienreduktion als Standardverfahren zeigt.

## Patentansprüche

1. Verwendung eines Desinfektionsmittels, das eine oder mehrere alkoholische Wirkstoffe mit 1 bis 3 Kohlenstoffatomen und ggf. weitere Hilfsstoffe und Wasser enthält, zur präoperativen Schnelldesinfektion talgdrusenreicher Haut innerhalb eines Zeitintervalls von weniger als 4 min, wobei die Keimreduktion auf der Haut nicht signifikant schlechter ist als die im Referenzverfahren mit 70 Vol.-% 2-Propanol bei 10 Minuten Einwirkzeit erreichten Reduktion.

2. Verwendung des Desinfektionsmittels gemäß Anspruch 1, **dadurch gekennzeichnet, dass** das verwendete Desinfektionsmittel enthält
| | | | |
|---|---|---|---|
| a. | 50 - 99 Gew.% | einen oder mehrere alkoholische Wirkstoffe mit 1 bis 3 Kohlenstoff-Atomen, | |
| b. | 0 - 10 Gew.-% | Hilfsstoffe, ausgewählt aus der Gruppe | |
| | | 0 - 1 Gew.-% | eines oder mehrerer Farbstoffe, |
| | | 0 - 5 Gew.-% | einer oder mehrerer hautverträglicher, organischer Säure(n) |
| | | 0 - 5 Gew.-% | weiterer Zusatzstoffe und |
| | | 0 - 5 Gew.-% | weiterer antimikrobieller Wirkstoffe und |
| c. | | Wasser, | |
wobei sich die Komponenten zu 100 Gew.-% ergänzen.

3. Verwendung gemäß einem der vorhergehenden Ansprüche, **dadurch gekennzeichnet, dass** das Desinfektionsmittel als alkoholischen Wirkstoff Ethanol, 1-Propanol, 2-Propanol oder eine Mischung der Alkohole enthält.

4. Verwendung gemäß einem der vorhergehenden Ansprüche, **dadurch gekennzeichnet, dass** das verwendete Desinfektionsmittel enthält
80 bis 95 Gew.-% 1-Propanol,
0 bis 10 Gew.-% Hilfsstoffe und
Wasser,
wobei sich die Komponenten zu 100 Gew.-% ergänzen.

5. Verwendung gemäß einem der Ansprüche 1 bis 3, **dadurch gekennzeichnet, dass** das verwendete Desinfektionsmittel enthält
- 80 - 95 Gew.% Ethanol,
- 0,1 - 5 Gew.-% einer oder mehrerer hautverträglicher organischer Säuren,
- 0 - 6 Gew.-% weiterer Hilfsstoffe und Wasser,
wobei sich die Komponenten zu 100 Gew.-% ergänzen.

6. Verwendung gemäß einem der vorhergehenden Ansprüche, **dadurch gekennzeichnet, dass** als Zusatzstoffe im verwendeten Desinfektionsmittel wasserlösliche und/oder alkohollösliche Polymere, Verdickungsmittel, Farbstoffe, hautverträgliche Tenside und/oder Emulgatoren enthalten sind.

7. Verwendung gemäß einem der vorhergehenden Ansprüche, **dadurch gekennzeichnet, dass** die hautverträgliche, organische Säure eine Mono-, Di- oder Polycarbonsäure ist, die ggf. mit einer oder mehreren Hydroxygruppen substituiert ist, bevorzugt Citronensäure, Ascorbinsäure, Milchsäure oder Pidolsäure, bevorzugt Milchsäure ist.

8. Verfahren zum Desinfizieren talgdrüsenreicher Haut,
wobei auf die Haut ein Desinfektionsmittel, das einen oder mehrere alkoholische Wirkstoffe mit 1 bis 3 Kohlenstoffatomen und ggf. weitere Hilfsstoffe und Wasser enthält, aufgetragen wird und das Desinfektionsmittel für ein Zeitintervall von weniger als 4 Minuten einwirkt und wobei auf der talgdrüsenreichen Haut eine Keimreduktion der residenten Hautflora erreicht wird, die nicht signifikant schlechter ist als die im Referenzverfahren erreichten Keimreduktion mit 70 Vol.-% 2-Propanol bei 10 Minuten Einwirkzeit.

9. Verfahren gemäß Anspruch 8, **dadurch gekennzeichnet, dass** das verwendete Desinfektionsmittel enthält
| | | |
|---|---|---|
| a. | 50 - 99 Gew.-% | einen oder mehrere alkoholische Wirkstoffe mit 1 bis 3 Kohlenstoff-Atomen, |
| b. | 0 - 10 Gew.-% | Hilfsstoffe, ausgewählt aus der Gruppe |
| | 0 - 1 Gew.- % | eines oder mehrerer Farbstoffe, |
| | 0 - 5 Gew.-% | einer oder mehrerer hautverträglicher, organische Säure(n) |
| | 0 - 5 Gew.-% | weiterer Zusatzstoffe und |
| | 0 - 5 Gew.-% | weiterer antimikrobieller Wirkstoffe und |
| c. | Wasser, | |
wobei sich die Komponenten zu 100 Gew.-% ergänzen.

10. Verfahren gemäß einem der Ansprüche 8 oder 9, **dadurch gekennzeichnet, dass** das Desinfektionsmittel als alkoholischen Wirkstoff Ethanol, 1-Propanol, 2-Propanol oder eine Mischung der Alkohole enthält.

11. Verfahren gemäß einem der Ansprüche 8 bis 10, **dadurch gekennzeichnet, dass** das Desinfektionsmittel besteht aus
- 80 bis 95 Gew.-% 1-Propanol,
- 0 bis 10 Gew.-% Hilfsstoffe und
- Wasser,
wobei sich die Komponenten zu 100 Gew.-% ergänzen.

12. Verfahren gemäß einem der Ansprüche 8 bis 10, **dadurch gekennzeichnet, dass** das Desinfektionsmittel besteht aus
- 80 - 95 Gew.-% Ethanol
- 0,1 - 5 Gew.-% einer oder mehrerer hautverträglicher organischer Säuren,
- 0 - 6 Gew.% weiterer Hilfsstoffe und Wasser,
wobei sich die Komponenten zu 100 Gew.-% ergänzen.

13. Verfahren gemäß einem der Ansprüche 8 bis 12 **dadurch gekennzeichnet, dass** als Zusatzstoffe im verwendeten Desinfektionsmittel wasserlösliche und/oder alkohollösliche Polymere, Verdickungsmittel, hautverträgliche Tenside, Farbstoffe und/oder Emulgatoren enthalten sind.

14. Verfahren gemäß einem der Ansprüche 8 bis 12, **dadurch gekennzeichnet, dass** die hautverträgliche organische Säure eine Mono-, Di- oder Polycarbonsäure ist, die ggf. mit einer oder mehreren Hydroxygruppen substituiert ist, bevorzugt Citronensäure, Ascorbinsäure, Milchsäure oder Pidolsäure.

15. Verfahren zur Auswahl eines alkoholischen Wirkstoffs für die Hautschnelldesinfektion umfassend die Schritte:
a. Bestimmung des wirksamsten Wirkstoffes durch Messungen der Bakterienreduktion jedes Wirkstoffs bei mindestens einer Konzentration,
wobei für jeden Wirkstoff die gleiche Konzentration angesetzt wird,
b. Bestimmung der geeigneten Konzentration des wirksamsten Alkohols gemäß Schritt a. durch Messung der Reduktionsfaktoren bei verschiedenen Konzentrationen dieses Alkohols und
c. Bestimmung einer geeigneten, im Vergleich zu dem Standardverfahren verkürzten Einwirkzeit der geeigneten Konzentration gemäß b. des wirksamsten Alkohols gemäß a. durch Messung des Reduktionsfaktors.
